# EUROPEAN PATENT SPECIFICATION

(11) **EP 1 067 845 B1**
(45) Date of publication and mention of the grant of the patent: **13.11.2002**
(21) Application number: 99913741.7
(22) Date of filing: 31.03.1999
(51) Int. Cl.: A23L 1/19

(54) **EDIBLE SPRAY EMULSION, PACKED IN A PRESSURIZED CONTAINER**
ESSBARE SPRÜHEMULSION
EMULSION COMESTIBLE A PULVERISER, EMBALLEE DANS UN RECIPIENT SOUS PRESSION

(30) Priority: 07.04.1998 NL 1008829
(43) Date of publication of application: 17.01.2001
(73) Proprietor: CAMPINA MELKUNIE B.V., NL-5301 LB Zaltbommel (NL)
(72) Inventor: MEIJER, Margarethe, Jennie, NL-4761 SV Zevenbergen (NL)
(74) Representative: Wittop Koning, Tom Hugo
(86) International application number: NL9900194
(87) International publication number: WO99051112

(56) References cited:
- EP-A- 0 095 001
- EP-A- 0 113 536
- EP-A- 0 294 119
- EP-A- 0 455 288
- EP-A- 0 469 656
- EP-A- 0 563 593
- FR-A- 2 185 018
- US-A- 3 944 680
- US-A- 4 943 443
- PATENT ABSTRACTS OF JAPAN vol. 011, no. 141 (C-421), 8 May 1987 & JP 61 280232 A (AJINOMOTO GENERAL FOOD KK), 10 December 1986
- TOSHIAKI SHIOYA: "Influence of time thickening on the whippability of creams" JOURNAL OF TEXTURE STUDIES, vol. 12, no. 1, 1981, pages 185-200, XP002087752
- DATABASE WPI Section Ch, Week 9217 Derwent Publications Ltd., London, GB; Class D13, AN 92-134531 XP002087754 & HU 58 481 A (MESZAROS S), 30 March 1992
- R. VANRUSSELT: "Crème en bombe aérosol" LAIT ET NOUS, no. 1, 1992, pages 13-15, XP002087753

## Description

The present invention relates to an emulsion comprising milk fat and one or more other types of fat constituents for preparing a cream substitute, having substantially the taste sensation and mouth feel of spray cream, being packed in a pressurized container comprising discharge means for discharging the emulsion in whipped form.

An emulsion for preparing spray cream is known and is usually sold packaged in aerosol cans. Spray cream is understood to mean an emulsion of the type described above in which the fat constituents are cream. Generally, the fat content and therefore the cream content in a spray cream emulsion is 20-35% by weight. The ingredients of an emulsion of this nature, in addition to cream, generally comprise skimmed milk, sugar, emulsifier and a stabilizer. Moreover, additional substances such as glucose syrup and flavourings may be included.

In this application, "pressurized container, comprising discharge means for discharging the emulsion in whipped form", is understood to mean each container, wherein the emulsion is included, which container comprises a valve for discharging and/or metering of the emulsion out of the container in a controlled manner, when the valve is opened. The contents of the container are pressurized, which can be achieved by measures that are commonly known in the art, such as with the aid of a propellant, by a container with moveable piston, or a container having several compartments. Preferably, the pressure in the pressurized container is achieved by the incorporation in the container of a propellant, that optionally dissolves in the emulsion. The pressurized container is preferably designed as a spray cream aerosol-can. The consumer has found a container of this nature to be a highly userfriendly form of packaging for whipping cream and also for topping.

The drawback of emulsions of this nature is the fact that the milk fat in the aerosol can is susceptible to oxidation, which may result in the flavour being impaired. In addition, the costs of preparing the emulsion are rather high owing to the relatively high cream content.

The specialist field also knows of replacing whipping cream with a vegetable fat emulsion which can be stored in an aerosol can. However, this whipping cream substitute (topping) tastes different, and consequently the consumer will generally not give preference to this product above the whipping-cream aerosol can mentioned above, despite the lower price.

US-A-3944680 describes a method for the preparation of whippable sour cream comprising milk fat and vegetable fat, having a pH of 5.0 or lower, using a particular emulsifier and globular protein that not coagulates at the pH of the emulsion.

US-A-4493443 discloses a foamable alcoholic product, comprising vegetable oil and possibly liquid cream as calcium source, having pH of approximately 5.0 and a fat content of below 10% in order to obtain a stable foam in the presence of alcohol. A particular foam stabilising agent is incorporated in the product.

EP-A-0469656 and EP-A-0563593 describe whippable cream emulsions comprising vegetable fat and butterfat. Said emulsions are however not incorporated in a pressurized container such as an aerosol.

JP-A-61 280 232 describes an aerosol for a whipping cream substitute, comprising an emulsion of which the fat particles are of vegetable origin. It was found that a ready-to-use emulsion can be obtained having a stability of at least 2 months, when the mean diameter of the particle drops in the emulsion would be 0,97 µm or lower.

The object of the present invention is to provide an emulsion, packed in a pressurized container, with which it is possible to prepare a spray cream substitute which the consumer is unable, or scarcely able, to distinguish from real spray cream and which has a long shelf life, and to this end the invention provides an emulsion comprising milk fat and one or more other types of fat constituents for preparing a cream substitute, having substantially the taste sensation and mouth feel of spray cream, being packed in a pressurized container comprising discharge means for discharging the emulsion in whipped form, the particle size distribution of the milk fat and the other type of fat constituents substantially corresponding to one another, and the volume weighed average diameter of the fat particles of the emulsion, expressed as D(4,3) value, lying between 1-3 µm.

Surprisingly, it has been found that such an emulsion which contains milk fat and other types of fat, referred to below as "cream mixture", stored in a pressurized container, is much less susceptible to oxidation than would be expected on the basis of the milk fat content. It is important that the particle size distribution of the milk fat substantially corresponds to that of the other fat constituents. This provides a homogeneous emulsion with which, after it has been dispensed from the container, a spray cream substitute is obtained which, with regard to both the taste sensation and the organoleptic sensation in the mouth ("mouthfeel"), is impossible or scarcely possible to distinguish from the original spray cream. The particle size distribution of the fat constituents of the emulsion according to the present invention can be expressed as the D_{(4,3)} value, defined as the volume weighed average diameter of the particles. The D_{(4,3)} can be calculated using particle size measurements carried out with the aid, for example, of laser diffraction apparatus. A D_{(4,3)} value of 5-10 µm means that the volume weighed average diameter of the fat particles lies between 5 and 10 µm. On the basis of the D_{(4,3)} value as defined above, the particle size distribution of the fat constituents in the emulsion according to the invention is D_{(4,3)} = 1-3 µm, preferably D_{(4,3)} = 1.5-2 µm.

Simply mixing a spray cream emulsion with a topping emulsion does not produce an emulsion according to the present invention; a mixture of this nature cannot be used to form a stable spray cream substitute. The reason for this lies partly in the fact that the particle size of the fat constituents of the topping emulsion is much smaller than that of the spray cream emulsion. Matching the particle size distribution of the fat constituents to one another, the fat particles of the emulsion having a D(4,3) value of between 1-3 µm, in fact makes it possible to obtain a pleasant spray cream substitute which when stored in an aerosol can remains stable at room temperature for at least 6 months. The other fat constituents can be selected, for example, from vegetable fats, animal fats and/or synthetic fats.

Preferably, the other types of fat constituents comprise a vegetable fat. It has been found that vegetable fats can be used to obtain a spray cream substitute of good quality, and the cost price of a spray cream mixture of this nature is considerably lower than that of a spray cream emulsion.

Advantageously, the vegetable fat is at least partially saturated. Fats of this nature are inexpensive and easy to work into the mixture. Moreover, there is no, or scarcely any, adverse effect on the taste sensation.

Advantageously, the total quantity of fat in the emulsion comprises 10-90% by weight vegetable fat, remainder milk fat, more preferably 20-75% by weight vegetable fat, remainder milk fat, and even more preferably 40-60% by weight vegetable fat, remainder milk fat. The consumer is unable, or scarcely able, certainly in the latter case, to distinguish the taste sensation from that of normal spray cream. The emulsion according to the invention advantageously comprises unwhipped cream. Although other types of milk fat, such as butterfat or fractionated milk fat, are also suitable, the best quality of spray cream substitute is obtained with unwhipped cream. Therefore, the milk fat is most preferably included in the form of unwhipped cream.

The fat content of the mixture according to the invention is 10-40%, more preferably 15-35% and most preferably 20-30% by weight. Such a fat content corresponds with that of spray cream; therefore, the cream mixture is eminently suitable for preparing a spray cream substitute with the aid of a pressurized container, which the consumer is unable, or scarcely able, to distinguish from standard spray cream.

The invention also relates to a method for preparing an emulsion which contains milk fat and vegetable fat according to the invention, using at least an emulsifier, comprising
a) dissolving emulsifier in optionally heated skimmed milk, water, vegetable fat and/or other fat constituents;
b) mixing additional, non-fat constituents in skimmed milk or water;
c) mixing the mixtures obtained in a) and b);
d) homogenizing the mixture obtained in c) so as to form an emulsion, until the particle size distributions of the fat constituents in the emulsion after homogenization substantially correspond to one another.

This results in a cream mixture with a uniform particle size distribution. If it is desired to incorporate cream into the mixture, the cream may be added to the mixture prior to homogenization; however, it is preferable to add the cream after the desired homogenization step and then to homogenize the cream-containing mixture again, so as to obtain the desired particle size. Therefore, the invention also relates to a method for preparing an emulsion which contains milk fat and vegetable fat according to the invention, using at least an emulsifier and unwhipped cream, comprising
a) dissolving emulsifier in optionally heated skimmed milk, water, vegetable fat and/or other fat constituents;
b) mixing additional, non-fat constituents in skimmed milk or water;
c) mixing the mixtures obtained in a) and b);
d) homogenizing the mixture obtained in c) so as to form an emulsion, in such a manner that the particle size distributions of the fat constituents in the emulsion after homogenization substantially correspond to that of unwhipped cream;
e) adding the desired quantity of unwhipped cream to the emulsion.

This results in a cream mixture in which particle size distributions of the fat constituents (the vegetable fat, the fats from the cream and any other fat constituents) substantially correspond to one another. Although an emulsion according to the present invention in which the particle size distribution of the fat constituents corresponds to that of unwhipped cream is suitable for storage in a pressurized container, it has a shorter shelf life, owing to the fact that the fat constituents may separate. This is because the particle size of the milk fat in unwhipped cream is somewhat heterogenous.

In order to avoid such separation, the emulsion is preferably homogenized in such a manner that the particle size distribution of the fat constituents in the emulsion which is ultimately to be obtained has a D_{(4,3)} value of 1-3 µm, even more preferably a D_{(4,3)} value of 1.5-2 µm, and most preferably a particle size distribution which corresponds to that of spray cream. This particle size distribution may have already been obtained during the above-mentioned first homogenization step. However, if cream is added after the first homogenization step, it is preferable to set the desired particle size distribution by means of an additional homogenization step, after the cream has been added. It is also possible to homogenize the cream separately until the desired particle size is reached, after which the homogenized cream is mixed with the remaining constituents, which have likewise been homogenized to the desired particle size. Also, a first homogenization step may be followed by a second, without the cream being added.

In a preferred embodiment of the method according to the present invention, therefore, the emulsion is homogenized again, ultimately resulting in the desired particle size distribution, and this emulsion is introduced into containers under aseptic conditions, and the containers are then pressurized using a propellant. In this way, it is possible to obtain aerosol cans in which the emulsion according to the present invention is stored. Prior to the second homogenization step, or following this step, the emulsion is preferably pasteurized or sterilized, in order to ensure a long shelf life for the emulsion.

Thus, according to the invention, the vegetable fat may be heated, after which the emulsifiers are dissolved therein. Other ingredients, such as sugar, glucose syrup, flavourings, etc., may be dissolved in the skimmed milk, which does not necessarily have to be heated for this purpose. The aqueous phase and the fat phase, i.e. the skimmed milk and the heated vegetable fat and, if appropriate, the milk fat and other fats, respectively, are mixed, and are then homogenized in such a way that the particle size distribution of the fat constituents substantially correspond to one another. As an alternative to an emulsifier, it is also possible to select other emulsifying constituents, in particular derived from milk, soya or eggs, such as for example powdered milk, caseinate, whey solids, lecithin, egg yolk, etc. The use of a stabilizer, such as carrageen, is recommended. In order to store the emulsion in a pressurized container, such as an aerosol can, the emulsion is then sterilized, homogenized again until the desired particle size distribution of the fat constituents is reached, and the homogenized emulsion is introduced into containers under aseptic conditions, after which the containers are pressurized using a propellant. The emulsion is usually sterilized using a UHT process, after which the emulsion, following a second homogenization step, is introduced into pressurized containers, for example into aerosol cans. Homogenization can be carried out in a manner known in the specialist field, such as using a homogenizer, homogenization pump, colloid mill or similar equipment. Since it is important to obtain a stable emulsion, it is preferable to carry out this treatment prior to the sterilization process.

The invention is explained in more detail below with reference to a number of examples.

### Examples

Using the formulations shown below, the vegetable fat is heated to 75°C, and the emulsifiers are dissolved therein. The other, non-fat ingredients are dissolved in skimmed milk which is not heated. The aqueous phase and the vegetable fat phase are mixed in line, homogenized until a uniform particle size distribution of the vegetable fat constituents which corresponds to that of cream is obtained. Then, the cream is added. The mixture obtained in this way is then sterilized in a UHT process, is homogenized downstream until the fat constituents have the desired particle size distribution of ready-to-use spray cream emulsion (D_{(4,3)} = 1.5-2 µm). Then, the emulsion is introduced into cans and nitrous oxide gas is then added. The spray cream substitute produced using a cream mixture of this nature is comparable to spray cream in all respects.

In the event that, for example, butter or milk fat is used in the emulsion instead of cream, it may be selected to heat all the fat constituents together and to homogenize them in one step, or if desired, two successive steps. Compositions of a cream mixture according to the present invention are shown in the table below.

**TABLE**

| Cream Mixture Formulation | | |
|---|---|---|
| Ingredients | Formulation 1 % by weight | Formulation 2 % by weight |
| cream 40% | 37.50 | 25.0 |
| skimmed milk | 42.6 | 50.6 |
| hardened palm | 10.0 | 15.00 |
| kernal oil sugar | 8.50 | 7.00 |
| glucose syrup | 1.00 | 2.00 |
| emulsifier: E471 | 0.30 | 0.30 |
| disodium hydrogen | 0.05 | 0.05 |
| phosphate carrageen | 0.03 | 0.03 |
| flavouring | 0.02 | 0.02 |

If desired, water, optionally in combination with powdered milk, may be used instead of skimmed milk.

It has been found that the spray cream substitute which is produced using the cream mixture in accordance with both formulations is not, or is scarcely, inferior to standard spray cream. The spray cream substitute produced using a cream mixture according to formulation 1 tastes less fatty, yet without impairing the mouthfeel, the stability and the appearance. Furthermore, it has been found that the flavour of the cream mixture according to the invention scarcely deteriorates with age and that the mixture remains stable for at least six months both when cooled and when not cooled, and forms a good product when dispensed. However, the flavour of standard spray cream does deteriorate, partly as a result of oxidation of the milk fat.

The cream mixture has a stiff consistency which is comparable to that of spray cream, or may even be stiffer.

The cost of cream mixture is considerably lower than that of spray cream, while the consumer is unable, or scarcely able, to distinguish the cream mixture from normal spray cream in terms of appearance and taste.

The cream mixture is eminently suitable for decorating, for example, desserts, cakes and gateaux, for both professional and domestic use, and is also suitable for use on coffee, chocolate milk, etc.

## Claims

1. Emulsion comprising milk fat and one or more other types of fat constituents for preparing a spray cream substitute, having substantially the taste sensation and mouth feel of spray cream, being packed in a pressurized container comprising discharge means for discharging the emulsion in whipped form, the particle size distribution of the milk fat and the other type of fat constituents corresponding to one another, and the volume weighed average diameter of the fat particles of the emulsion, expressed as D(4,3) value, lying between 1-3 µm.

2. Emulsion comprising milk fat according to claim 1, **characterized in that** the particle size distribution, defined as D_{(4,3)} lies between 1.5-2 µm.

3. Emulsion comprising milk fat according to any of the preceding claims, **characterized in that** the particle size distribution of the milk fat and of the other fat constituents substantially corresponds to that of spray cream.

4. Emulsion according to any of the preceding claims, **characterized in that** the other types of fat constituents comprise vegetable fat.

5. Emulsion according to any of the preceding claims, **characterized in that** the vegetable fat is at least partially saturated.

6. Emulsion according to claim 4 or 5, **characterized in that** the total quantity of fat in the emulsion comprises 10-90%, preferably 20-75% and most preferably 40-60% by weight vegetable fat, the remainder being milk fat.

7. Emulsion according to one or more of the preceding claims, **characterized in that** it comprises unwhipped cream.

8. Emulsion according to one or more of the preceding claims, **characterized in that** the milk fat is included in the form of unwhipped cream.

9. Emulsion according to one or more of the preceding claims, **characterized in that** the fat content is 10-40%, preferably 15-35%, and most preferably 20-30% by weight.

10. Method for preparing an emulsion which contains milk fat and vegetable fat according to any of claims 1-9, using at least an emulsifier, comprising
a) dissolving emulsifier in optionally heated skimmed milk, water, vegetable fat and/or other fat constituents;
b) mixing additional, non-fat constituents in skimmed milk or water;
c) mixing the mixtures obtained in a) and b);
d) homogenizing the mixture obtained in c) in such a manner that the particle size distributions of the fat constituents in the emulsion after homogenization substantially correspond to one another.

11. Method for preparing an emulsion which contains milk fat and vegetable fat according to any of claims 1-9, using at least an emulsifier and unwhipped cream, comprising
a) dissolving an emulsifier in optionally heated skimmed milk, water, vegetable fat and/or other fat constituents;
b) mixing additional, non-fat constituents in skimmed milk or water;
c) mixing the mixtures obtained in a) and b);
d) homogenizing the mixture obtained in c) so as to form an emulsion, in such a manner that the particle size distributions of the fat constituents in the emulsion after homogenization substantially correspond to that of unwhipped cream;
e) adding the desired quantity of unwhipped cream to the emulsion.

12. Method according to claim 10 or 11, **characterized in that** the emulsion is homogenized again, is introduced into containers under aseptic conditions, and the containers are then pressurized using a propellant.

## Patentansprüche

1. Emulsion, umfassend Milchfett und eine oder mehrere andere Arten von Fettbestandteilen zum Herstellen eines Sprühsahnesurrogats, welches im Wesentlichen die Geschmacksempfindung und das Mundgefühl von Sprühsahne aufweist und in einem Druckbehälter verpackt ist, der eine Abgabeeinrichtung zur Abgabe der Emulsion in geschlagener Form umfasst, wobei die Teilchengrößenverteilung des Milchfetts und der anderen Art von Fettbestandteilen einander entsprechen und der volumengewichtete mittlere Durchmesser der Fettteilchen der Emulsion, angegeben als D(4,3)-Wert, zwischen 1-3 mm liegt.

2. Emulsion, umfassend Milchfett nach Anspruch 1, **dadurch gekennzeichnet, dass** die Teilchengrößenverteilung, definiert als D_{(4,3)}, zwischen 1,5-2 µm liegt.

3. Emulsion, umfassend Milchfett nach einem der vorangehenden Ansprüche, **dadurch gekennzeichnet, dass** die Teilchengrößenverteilung des Milchfetts und der anderen Fettbestandteile im Wesentlichen der von Sprühsahne entspricht.

4. Emulsion nach einem der vorangehenden Ansprüche, **dadurch gekennzeichnet, dass** die anderen Arten von Fettbestandteilen Pflanzenfett umfassen.

5. Emulsion nach einem der vorangehenden Ansprüche, **dadurch gekennzeichnet, dass** das Pflanzenfett mindestens teilweise gesättigt ist.

6. Emulsion nach Anspruch 4 oder 5, **dadurch gekennzeichnet, dass** die Gesamtmenge an Fett in der Emulsion 10-90 Gew.-% vorzugsweise 20-75 Gew.-% und am meisten bevorzugt 40-60 Gew.-% Pflanzenfett umfasst, wobei der Rest Milchfett ist.

7. Emulsion nach einem oder mehreren der vorangehenden Ansprüche, **dadurch gekennzeichnet, dass** sie ungeschlagene Sahne umfasst.

8. Emulsion nach einem oder mehreren der vorangehenden Ansprüche, **dadurch gekennzeichnet, dass** das Milchfett in Form von ungeschlagener Sahne enthalten ist.

9. Emulsion nach einem oder mehreren der vorangehenden Ansprüche, **dadurch gekennzeichnet, dass** der Fettgehalt 10-40 Gew.-%, vorzugsweise 15-35 Gew.-% und am meisten bevorzugt 20-30 Gew.-% beträgt.

10. Verfahren zum Herstellen einer Emulsion, welche Milchfett und Pflanzenfett enthält, nach einem der Ansprüche 1-9, wobei mindestens ein Emulgator verwendet wird, umfassend
a) Auflösen des Emulgators in gegebenenfalls erwärmter Magermilch, Wasser, Pflanzenfett und/oder anderen Fettbestandteilen;
b) Vermischen von weiteren fettfreien Bestandteilen in Magermilch oder Wasser;
c) Vermischen der in a) und b) erhaltenen Mischungen;
d) Homogenisieren der in c) erhaltenen Mischung auf eine solche Weise, dass die Teilchengrößenverteilungen der Fettbestandteile in der Emulsion nach der Homogenisierung einander im Wesentlichen entsprechen.

11. Verfahren zum Herstellen einer Emulsion, welche Milchfett und Pflanzenfett enthält, nach einem der Ansprüche 1 bis 9, wobei mindestens ein Emulgator und ungeschlagene Sahne verwendet werden, umfassend
a) Auflösen eines Emulgators in gegebenenfalls erwärmter Magermilch, Wasser, Pflanzenfett und/oder anderen Fettbestandteilen;
b) Vermischen von weiteren fettfreien Bestandteilen in Magermilch oder Wasser;
c) Vermischen der in a) und b) erhaltenen Mischungen;
d) Homogenisieren der in c) erhaltenen Mischung, um eine Emulsion zu bilden, auf eine solche Weise, dass die Teilchengrößenverteilungen der Fettbestandteile in der Emulsion nach der Homogenisierung im Wesentlichen der von ungeschlagener Sahne entsprechen;
e) Hinzugeben der gewünschten Menge an ungeschlagener Sahne zu der Emulsion.

12. Verfahren nach Anspruch 10 oder 11, **dadurch gekennzeichnet, dass** die Emulsion erneut homogenisiert wird, unter aseptischen Bedingungen in Behälter eingefüllt wird und die Behälter anschließend unter Druck gesetzt werden, wobei ein Treibmittel verwendet wird.

## Revendications

1. Emulsion comprenant de la matière grasse de lait et un ou plusieurs autres types de matières grasses pour la préparation d'un substitut de crème à pulvériser, ayant substantiellement le goût et la sensation en bouche d'une crème à pulvériser, emballée dans un récipient sous pression comprenant des moyens de libération pour la libération de l'émulsion sous forme fouettée, la distribution de la taille de particules de la matière grasse de lait et des autres matières grasses correspondant l'une à l'autre, et le diamètre moyen des particules de matière grasse dans l'émulsion obtenu à partir de la masse volumique, exprimée par la valeur D(4,3), étant située entre 1-3 µm.

2. Emulsion comprenant de la matière grasse de lait selon la revendication 1, **caractérisée en ce que** la distribution de la taille des particules, définies par D(4,3), est située entre 1,5-2 µm.

3. Emulsion comprenant de la matière grasse de lait selon l'une quelconque des revendications précédentes, **caractérisée en ce que** la distribution de la taille des particules de la matière grasse de lait et des autres matières grasses correspond substantiellement à celle d'une crème à pulvériser.

4. Emulsion selon l'une quelconque des revendications précédentes, **caractérisée en ce que** les autres matières grasses comprennent de la graisse végétale.

5. Emulsion selon l'une quelconque des revendications précédentes, **caractérisée en ce que** la graisse végétale est une graisse au moins partiellement saturée.

6. Emulsion selon l'une des revendications 4 ou 5, **caractérisée en ce que** la quantité totale de matière grasse dans l'émulsion comprend de 10 à 90%, de préférence de 20 à 75 %, et plus particulièrement de 40 à 60% en poids de graisse végétale, le reste étant de la matière grasse de lait.

7. Emulsion selon l'une quelconque des revendications précédentes, **caractérisée en ce qu'**elle contient de la crème non fouettée.

8. Emulsion selon l'une quelconque des revendications précédentes, **caractérisée en ce que** la matière grasse de lait est introduite sous forme de crème non fouettée.

9. Emulsion selon l'une quelconque des revendications précédentes, **caractérisée en ce que** la teneur en matière grasse est de 10 à 40%, de préférence de 15 à 35%, plus particulièrement de 20 à 30% en poids.

10. Procédé pour la préparation d'une émulsion qui contient de la matière grasse de lait et de la graisse végétale selon l'une quelconque des revendications 1 à 9, en utilisant au moins un émulsifiant, comprenant les étapes de :
a) dissolution de l'émulsifiant dans du lait écrémé, de l'eau, de la graisse végétale et/ou une autre matière grasse éventuellement chauffés,
b) mélangeage de constituants non gras additionnels dans du lait écrémé ou dans de l'eau ;
c) mélangeage des mélanges obtenus dans les étapes a) et b),
d) homogénéisation du mélange obtenu en c) de telle sorte que les distributions des tailles de particules des matières grasses dans l'émulsion après l'homogénéisation correspondent substantiellement les unes aux autres.

11. Procédé pour la préparation d'une émulsion qui contient de la matière grasse de lait et de la graisse végétale selon l'une quelconque des revendications 1 à 9, en utilisant au moins un émulsifiant et de la crème non fouettée, comprenant les étapes de :
a) dissolution d'un émulsifiant dans du lait écrémé, de l'eau, de la graisse végétale et/ou une autre matière grasse éventuellement chauffés,
b) mélangeage de constituants non gras additionnels dans du lait écrémé ou dans de l'eau ;
c) mélangeage des mélanges obtenus dans les étapes a) et b),
d) homogénéisation du mélange obtenu en c) pour former une émulsion, de telle sorte que les distributions des tailles de particules des matières grasses dans l'émulsion après l'homogénéisation correspondent substantiellement à celles de la crème non fouettée,
e) addition à l'émulsion de la quantité souhaitée de crème non fouettée.

12. Procédé selon l'une des revendications 10 ou 11, **caractérisé en ce que** l'émulsion est homogénéisée une nouvelle fois, introduite dans des récipients dans des conditions d'asepsie, et **en ce que** les récipients sont mis sous pression à l'aide d'un gaz vecteur.
